# EUROPEAN PATENT APPLICATION

(11) **EP 4 733 292 A1**
(43) Date of publication of application: **29.04.2026**
(21) Application number: 24774306.5
(22) Date of filing: 28.02.2024
(51) Int. Cl.: C05C 11/00

(54) **FERTILISER COMPOSITION FOR THE STIMULATION OF AUTOCHTHONOUS AND EXOGENOUS MICROBIOTA OF ARABLE AGRICULTURAL SOIL**

(30) Priority: 23.03.2023 ES 202330489 U
(71) Applicant: Garcia Lopez, Juan, 41740 Lebrija Sevilla (ES); Califa Agroconsulting, S.L., 14011 Córdoba (ES)
(72) Inventor: GARCIA LOPEZ, Juan, 41740 LEBRIJA, SEVILLA (ES)
(74) Representative: Santarelli
(86) International application number: PCT/ES2024/070118
(87) International publication number: WO 2024/194506

(57) **Abstract**

The invention relates to a fertiliser composition for the stimulation of autochthonous and exogenous microbiota of arable agricultural soil, comprising the following components in the following ranges (in brackets):

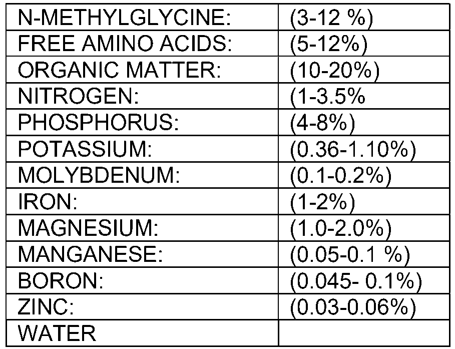

## Description

### PURPOSE OF THE INVENTION

Increasing food production to meet the needs of a growing population is one of the world's biggest challenges. Agricultural production is threatened, due to a reduction in arable land, an increase in anthropogenic activities, rising temperatures with sudden climate changes, floods, droughts, and increased soil salinity resulting from the intensive use of inorganic fertilisation, which leads to reduced agricultural yields.

This necessary increase in agricultural production must be achieved by reducing the impact that agriculture has on the environment in terms of the carbon footprint, the water footprint and the nitrogen footprint, which are key issues in European agricultural policies, the Green Deal 2050 (climate-neutral EU, farm-to-fork strategy), Horizon 2030 (including targets to reduce the use of conventional fertilisers by 20% and nutrient losses by 50%), and finally the new CAP 2023-2027 (greener and eco-friendlier, implementation of eco-schemes, etc.).

The purpose of this patent is to reduce the nitrogen footprint by reducing the use of chemically synthesised nitrogen compounds, thus improving the environment, decreasing the eutrophication of water bodies and the emission of nitrogen into the atmosphere, and, as a consequence, improving the health of the soil and therefore that of crops and the population.

The chemical pressure exerted on agricultural soils due to the indiscriminate use of fertilisers and phytosanitary products negatively impacts the beneficial microbiota of the soil, and consequently the productive potential of crops.

Today, biostimulants have become one of the most promising tools to improve crop growth and productivity in a natural way, solving some of the problems associated with the use of chemical fertilisers.

The group of biostimulants under EU legislation (2019/1009) includes those consisting of microorganisms: mycorrhizal fungi and three genera of bacteria (*Azospirillum, Azotobacter* and *Rhizobium*) and non-microbial biostimulants: humic acids, protein hydrolysates and nitrogen compounds (amino acids) and algae extracts are among the most important.

Biological nitrogen fixation (BNF) in plants has the potential to be an important source of nitrogen that can reduce our dependence on industrial nitrogen production.

BNF carried out by diazotrophic bacteria can contribute approximately half of the nitrogen needed by the cultivated plants. This is a low-cost, non-polluting nitrogen and a way to increase soil fertility and crop production.

The purpose of this patent is to develop a fertiliser composition for application to soil that activates and increases the indigenous microbiota in the soil and promotes the establishment of the non-native microbiota provided by farmers, in particular PGPR (Plant Growth-Promoting Rhizobacteria), resulting in a greater increase in the enzymes responsible for nitrogen fixation (nitrogenases) and phosphorus solubilisation (phosphatases), as well as various phytohormones that promote root development in cultivated plants (ABA, IAA, ET, CK, JA) and secondary metabolites such as siderophores.

The result obtained by using this invention was a significant reduction in the use of chemical fertilisers.

The product of the invention is based on the following components:
- **N-methylglycine,** which is an intermediate product and a by-product in the synthesis and degradation of glycine. N-methylglycine is metabolised to glycine by the enzyme sarcosine dehydrogenase, while glycine N-methyltransferase generates N-methylglycine from glycine.
- **Fe and Mo** are elements that form part of the Fe-Mo cofactor, which constitutes the active site of the nitrogenase enzymes and are responsible for fixing atmospheric nitrogen N₂ to ammonium ions NH₄₊; these enzymes are part of nitrogen-fixing bacteria, such as *Rhizobium,* azotobacteria and *Clostridium.*
- **Phosphorus (P):** The N fixation process requires an available source of energy for bacterial growth and the transformation of N₂ into NH₃. It is essential as an energy source when 16 molecules of adenosine triphosphate (ATP) are converted to adenosine diphosphate (ADP) for each N2 molecule that is reduced to NH3. ATP is generated in the process of photosynthesis, when light energy is transformed and stored as ATP. P deficiency restricts root growth, the process of photosynthesis, and the transport of sugars, as well as other functions, which directly or indirectly influence nitrogen fixation.

- **Boron (B):** The importance of B in plant growth was discovered in the 1920s and it has since been recognised as an important micronutrient in all higher plants. B has an impact on the interaction between the surface cells of legumes and *Rhizobium* and nodule formation. B deficiency inhibits N fixation by decreasing nitrogenase activity. B is also important in root growth and development, due to hormones involved in this process.
- **Magnesium (Mg):** Magnesium is the structural foundation of chlorophyll and therefore essential in the photosynthesis process. It is key in the phosphorylation processes in the plant, promoting energy transfer, conversion and accumulation (ATP).
- **Zinc (Zn):** Zinc is used in the formation of chlorophyll and also activates the enzymes responsible for certain proteins.
- **Manganese (Mn):** Manganese is involved in chlorophyll production and activates enzymes such as the nitrate reductase enzyme and carbohydrate metabolism enzymes.
- **Amino acids:** A mixture of amino acids of plant origin, produced by enzymatic hydrolysis, a source of nutrition for the microbiota and a macro and microelement complexing agent, increasing their efficiency. The fundamental amino acids, expressed as a percentage of the total amino acids, are as follows:
   - Lysine (35-50%): a catalyst for nitrogen absorption.
   - Glycine (4.5-7.5%): Glycine has a high chelating action, so a high content of this amino acid promotes the uptake of nutrients. Applying it to the soil complexes the nutrients trapped therein. Glycine also acts by improving the flowering and fertilisation process. The amino acid glycine is closely related to chlorophyll and photosynthesis, and its application promotes the development and emergence of new shoots. Asparagine (0.5-1.5%): Asparagine increases nitrogen uptake, reducing chlorosis caused by a lack of this macroelement.
   - Methionine (0.1-0.5%): Methionine promotes root growth. It is involved in fruit ripening and colour development. It is a precursor of ethylene.
- **Organic matter:** For the physical and chemical improvement of the soil.

The advantages of this invention are as follows:
- It supports the seed germination process.
- It activates the formation of the root system.
- It stimulates the uptake of provided to the soil or plant.
- It increases the absorption of N from atmospheric fixation.
- It increases P solubilisation.
- It increases siderophore production. It accelerates leaf formation and growth.
- It activates the process of photosynthesis and carbon fixation.
- It promotes flower formation, fertilisability and fruit setting.
- It decreases the effects of stress caused by climatic, chemical or other actions, such as salinity, droughts, phytotoxicity, high temperatures, etc.
- It facilitates the regeneration of tissue damaged by pruning, beating, hailstorms, phytotoxicity, burns, etc.
- It protects the environment because it does not contain heavy metals, it is non-toxic, non-hazardous and non-flammable, and it reduces the amount of pesticide that needs to be applied.
- With the nutrients it provides, it supports soil restoration and the soil's beneficial microbiota.
- It increases the early nature of harvests, and the uniformity, colour and quality thereof: lower gluten level in cereals (according to a study entitled "Could Global Intensification of Nitrogen Fertilisation Increase Immunogenic Proteins and Favour the Spread of Coeliac Pathology" published by the Foods journal and led by Josep Peñuelas, researcher at the CSIC and the Centre for Ecological Research and Forestry Applications at the University of Barcelona, higher Brix level in fruit, etc.).

### BACKGROUND TO THE INVENTION

Although no inventions have been found that are identical to the one described, the documents found that reflect the state of the art in relation thereto are set out below: Document ES2698384T3 describes a microcapsule with a size of 10 to 3000 mm comprising i) a core comprising at least one probiotic, a prebiotic or a mixture thereof embedded in a polymer selected from alginate and pectin, ii) an inner layer surrounding the core comprising at least one probiotic, a prebiotic or a mixture thereof embedded in a polymer selected from alginate and pectin, and iii) an outer layer comprising a hydrophobic material with a melting point of 35 to 90°C surrounding the inner layer, wherein the at least one probiotic or prebiotic comprised in the core is different and incompatible with at least one probiotic or prebiotic comprised in the inner layer.

Document EP3205216A1 relates to a probiotic, prebiotic or a mixture thereof embedded in a polymer selected from alginate and pectin, (ii) an inner layer surrounding the core comprising at least one probiotic, prebiotic or a mixture thereof embedded in a polymer selected from alginate and pectin, and (iii) an outer layer surrounding the inner layer comprising hydrophobic material having a melting point of between 35 and 90°C, wherein the at least one probiotic or prebiotic comprised in the core is different from the at least one probiotic or prebiotic comprised in the inner layer.

Document JL/a/2006/000034 proposes an organic biofertiliser composition characterised in that it comprises a mixture of products: sugarcane syrup or molasses, beneficial microorganisms, a moisture retainer, an organic fertiliser, granulated sugarcane compost, seaweed or seaweed components, liquid humus and beneficial fungi.

Document ES2347124A1 claims a method for preparing an environmentally friendly fertiliser from beachwash seaweed, fish waste and lignocellulosic material, characterised in that it comprises the steps of:
a) alternately superimposing layers of seaweed, layers of fish waste and layers of lignocellulosic material, at ambient temperature and pressure, to obtain a pile about 1 m high;
b) turning the pile weekly for a period of 2 months until an aerated, mixed and homogeneous compost is obtained;
c) maturing and fortnightly turning for another 2 months, until a stable and mature compost is obtained, including control of pH, moisture, electrical conductivity and carbon and nitrogen concentrations;
d) sieving the compost from step c) with a sieve with a mesh size of 20 mm in order to obtain a homogeneous fertiliser.

**Conclusions:** As can be seen from the research carried out, none of the identified documents solves the posed problems as the proposed invention does, the proposed invention being better than the identified patents in all cases.

### DESCRIPTION OF THE INVENTION

The compound that is the object of the present invention is constituted from a base formula containing N-methylglycine in a mixture with elements acting as enzymatic metal cofactors (Fe and Mo), and P as an energy source. P is involved in this process as an energy source when 16 molecules of adenosine triphosphate (ATP) are converted to adenosine diphosphate (ADP) for each N2 molecule that is reduced to NH3. ATP is generated during the process of photosynthesis, when light energy is transformed and stored as ATP which can then be used by the plant. Other macroelements (N and K) and microelements required for the biological activation of the microorganisms in the soil (B, Mg, Zn and Mn) are added.

The formula of this invention is completed with two options. The first option is with free amino acids of plant origin that support the microbiota in the soil and organic matter as an improver of the physical and chemical structure of the soil.

In the second embodiment, the formula is completed with macroalgae (*Ascophyllum nodosum* and/or *Ecklonia maxima*)*,* microalgae (*Spirulina*) and yeasts (*Saccharomyces spp.*)*.* In this case, the complement to the base of the invention is made from *Spirulina* and macroalgae as a source of proteins, vitamins, minerals, polysaccharides and essential fatty acids, as well as yeasts that stimulate the microbiota in the soil.

### DESCRIPTION OF A PREFERRED EMBODIMENT

A preferred embodiment of the present invention is a compound for soil containing the following components as a percentage by weight in the ranges in parentheses:

| | | |
|---|---|---|
| N-METHYLGLYCINE: | 6.20% | (3-12%) |
| FREE AMINO ACIDS: | 8.56% | (5-12%) |
| ORGANIC M.: | 13.17% | (10-20%) |
| NITROGEN: | 1.67% | (1-3.5%) |
| PHOSPHORUS: | 6.13% | (4-8%) |
| POTASSIUM: | 1.10% | (0.36-1.10%) |
| MOLYBDENUM: | 0.11% | (0.1-0.2%) |
| IRON: | 1.00% | (1-2%) |
| MAGNESIUM: | 1.57% | (1.0-2.0%) |
| MANGANESE: | 0.05% | (0.05-0.1%) |
| BORON: | 0.045% | (0.045-0.1%) |
| ZINC: | 0.03% | (0.03-0.06%) |
| WATER | 60.37% | |

Finally, chelating agents (EDTA) AND complexing agents (LIGNOSULPHONATES) are added both to the diluted extract and to the concentrated extract to stabilise them and strengthen their action as fertiliser.

## Claims

1. Fertiliser composition for stimulating indigenous and exogenous microbiota in arable agricultural soils, **characterised in that** it comprises the following components in the following ranges in parentheses:
| | |
|---|---|
| N-METHYLGLYCINE: | (3-12%) |
| FREE AMINO ACIDS: | (5-12%) |
| ORGANIC M.: | (10-20%) |
| NITROGEN: | (1-3.5%) |
| PHOSPHORUS: | (4-8%) |
| POTASSIUM: | (0.36-1.10%) |
| MOLYBDENUM: | (0.1-0.2%) |
| IRON: | (1-2%) |
| MAGNESIUM: | (1.0-2.0%) |
| MANGANESE: | (0.05-0.1%) |
| BORON: | (0.045-0.1%) |
| ZINC: | (0.03-0.06%) |
| WATER | |

2. Fertiliser composition for stimulating indigenous and exogenous microbiota in arable agricultural soils according to Claim 1, **characterised in that** it comprises the following specific values of the components by weight:
| | |
|---|---|
| N-METHYLGLYCINE: | 6.20% |
| FREE AMINO ACIDS: | 8.56% |
| ORGANIC M.: | 13.17% |
| NITROGEN: | 1.67% |
| PHOSPHORUS: | 6.13% |
| POTASSIUM: | 1.10% |
| MOLYBDENUM: | 0.11% |
| IRON: | 1.00% |
| MAGNESIUM: | 1.57% |
| MANGANESE: | 0.05% |
| BORON: | 0.045% |
| ZINC: | 0.03% |
| WATER | 60.37% |

3. Fertiliser composition for stimulating indigenous and exogenous microbiota in arable agricultural soils according to Claim 1, **characterised in that** chelating agents (EDTA) and complexing agents (lignosulphonates) are added to the composition.

4. Fertiliser composition for stimulating indigenous and exogenous microbiota in arable agricultural soils according to Claim 1, **characterised in that** the formula is completed with macroalgae (*Ascophyllum nodosum* and/or *Ecklonia maxima*)*,* microalgae (*Spirulina*) and yeasts (*Saccharomyces spp.*)*.*
